# EUROPÄISCHE PATENTANMELDUNG

(11) **EP 1 894 856 A1**
(43) Veröffentlichungstag der Anmeldung: **05.03.2008**
(21) Anmeldenummer: 06018443.9
(22) Anmeldetag: 04.09.2006
(51) Int. Cl.: B65D 90/08

(54) **Tank**

(71) Anmelder: Graf Plastics GmbH, 79331 Teningen (DE)
(72) Erfinder: Graf, Otto P., 79331 Teningen (DE)
(74) Vertreter: Grünecker, Kinkeldey, Stockmair & Schwanhäusser Anwaltssozietät

(57) **Zusammenfassung**

Bei einem Tank (T), insbesondere einem Wassertank aus Kunststoff, der offene, mit Öffnungsrandstrukturen (R) aufeinander gesetzte Tankteile (1, 2) und eine elastische Dichtungsanordnung (D) in aufeinander ausgerichteten Dichtungskanälen (11) aufweist, wobei die Öffnungsrandstrukturen (R) in einer Fügeebene (E) durch äußere Spannmittel (4) unter Komprimieren der Dichtungsanordnung (D) gegeneinander spannbar sind, umfasst die Dichtungsanordnung zwei getrennte, im gefügten Tank (T) komprimierend gegeneinander gepresste Dichtungen (16), deren jede im Dichtungskanal (11) eines Tankteils sitzt und in eingesetztem, noch nicht komprimiertem Zustand von dem Dichtungskanal (11) bis mindestens zur Fügeebene (E) vorsteht.

## Beschreibung

Die Erfindung betrifft einen Tank gemäß Oberbegriff des Patentanspruchs 1.

Aus dem Katalog R26, Ausgabe 2006, der Firma Otto Graf GmbH Kunststofferzeugnisse, DE "Das Komplettprogramm 2006", Seite 34, und schematisch aus der EP 0 870 877 B1, ist ein Tank bekannt, der aus zwei identischen, durch Schnellverbinder in C-Klammerform gefügten Tankteilen erstellt wird. Jede Tankteilwand endet in der Öffnungsrandstruktur an einem inneren abgeflachten Öffnungsrand. Oberhalb des inneren Öffnungsrandes ist ein äußerer, umlaufender Flansch geformt, der stellenweise Widerlager für die Klam-mern aufweist. An den inneren Öffnungsrand schließt sich ein Dichtungskanal an, der durch einen Mittelsteg begrenzt wird und sich in Richtung zur Fügeebene erweitert. Der Mittelsteg endet abgeflacht auf der gleichen Höhe wie der innere Öffnungsrand. An den Mittelsteg schließt sich ein äußerer Kanal mit ähnlicher Form wie der Dichtungskanal an. Dieser Kanal wird durch einen umlaufenden Außensteg begrenzt, der bis in die Fügeebene reicht. Im Tank ist in den beiden Dichtungskanälen eine einstückige Dichtungsanordnung untergebracht, die durch die Klammern komprimiert wird, um die Dichtwirkung zu erzeugen. Nur die Außenstege liegen stumpf aneinander, während zwischen den Mittelstegen und den inneren Öffnungsrändern Zwischenspalte vorliegen. Da jeder Tankteil, z. B. für ein Fassungsvermögen von 1600 I, ca. 30 kg schwer ist, einen Außendurchmesser von etwa 1350 mm und eine Höhe von etwa 800 mm haben kann, gestaltet sich die Montage unter Umständen schwierig, da die Dichtung zunächst in den einen Dichtungskanal eingesetzt und dann beim Aufsetzen des anderen Tankteils in den anderen Dichtungskanal eingefädelt und eingepresst werden muss, wobei die Dichtungskanäle zueinander ausgerichtet werden müssen. Es können in den Öffnungsrandstrukturen integrierte Zentrierzapfen und -löcher vorgesehen sein, um die Montage zu erleichtern. Die integrierten Zentrierzapfen stören ggfs. beim Transport und können bei der Montage brechen oder beschädigt werden. Bei ungünstigen Arbeitsbedingungen (Erdeinbau) oder schlechtem Wetter kann die Montage nicht nur mühsam und zeitaufwändig sein, sondern es kann die Dichtungsanordnung gequetscht oder beschädigt werden, so dass entweder die Montage nicht zu Ende geführt werden kann, oder der Tank später leckt. Diese Montageprobleme fallen bei Tanks mit noch größerem Fassungsvermögen und/oder schwereren und größere Hälften (z. B. bis 100 kg) noch stärker ins Gewicht.

Der Erfindung liegt die Aufgabe zugrunde, einen Tank montagefreundlich und betriebssicher zu gestalten.

Die gestellte Aufgabe wird mit den Merkmalen des Patentanspruchs 1 gelöst.

Da die Dichtungsanordnung aus zwei separaten Dichtungen besteht, lässt sich jede Dichtung bequem in ihren Dichtungskanal einsetzen. Beim Aufeinandersetzen der Tankteile braucht dann nur noch darauf geachtet zu werden, die Öffnungsrandstrukturen sauber aufeinander zu zentrieren. Dabei können sogar kleine Querversetzungen ohne nennenswertes Abheben des oberen Tankteils leicht kompensiert werden, da sich beide Dichtungen gegebenenfalls leicht relativ zueinander verschieben lassen, insbesondere wenn sie eingefettet oder befeuchtet sind. Diese Montageerleichterung hat erstaunlicherweise keinen negativen Einfluss auf die Betriebssicherheit, weil die beiden, unter dem Fügedruck gegeneinander gepressten Dichtungen vollständig einwandfrei abdichten und sogar die Betriebssicherheit erhöhen, da durch externe oder interne Kräfte auftretende Querversetzbewegungen ohne ggfs. kritische Scherkräfte ausgeglichen werden. Dieses Prinzip ist nicht nur zweckmäßig für Tanks, die aus identischen Tankteilen gefügt werden, sondern kann auch bei anderen Tanks oder Schächten oder Behältern zweckmäßig sein, bei denen aufgrund der Größe und des Gewichts die Handhabung beim Herstellen der Fügeverbindung und Abdichtung schwierig ist.

Zweckmäßig hat jede Dichtung einen Steckfuß, eine, vorzugsweise beidseitige, Verbreiterung am oberen Ende des Steckfußes, und ein Gegenprofil zum Zusammenwirken mit dem Gegenprofil der anderen Dichtung. Diese Bauweise erleichtert das Einsetzen der Dichtung in den Dichtungskanal, und zwar bis auf die richtige Tiefe und mit dem erforderlichen Überstand.

Die Dichtung ist zweckmäßig eine Spezialdichtung, nämlich eine, vorzugsweise extrudierte, Hohlkammer-Dichtung aus flexiblem Kunststoff oder Gummi. Die Hohlkammern sind vorteilhaft, um eine formentechnisch gut beherrschbare, im Wesentlichen gleichmäßige Wandstärke der Dichtung zu erzielen, und um das Schluckvermögen der Dichtung zu verbessern.

Zweckmäßig besitzt die Dichtung eine erste Hohlkammer im Steckfuß, damit sich der Steckfuß leicht einsetzen lässt, und eine zweite Hohlkammer unterhalb des Gegenprofils, so dass das Gegenprofil besser mit dem Gegenprofil der anderen Dichtung zusammenwirken kann.

Am Steckfuß sind zweckmäßig an beiden Seite längslaufende Dichtlippen angeformt, die entgegen der Einsteckrichtung zurückweichen, während die Verbreiterung beiderseits mit Dichtlippen endet, die in Einsteckrichtung schräggestellt sind. Die Dichtlippen am Steckfuß lassen sich leicht einbringen und verbessern den Halt der eingesetzten Dichtung. Die Dichtlippen an der Verbreiterung stützen sich beim Einsetzen und unter dem Druck der anderen Dichtung ab, um jede Dichtung ordnungsgemäß zu positionieren, und auch außenseitig abzudichten.

Das Gegenprofil hat in nicht komprimiertem Zustand der Dichtung zweckmäßig eine konkave oder vertiefte freie Rinnenfläche, die an beiden Seiten mit entgegengesetzt zur Einsteckrichtung zurückweichenden Dichtlippen endet. Unter dem Anpressdruck der anderen Dichtung kann die Rinnenfläche flachgedrückt werden, so dass die beiden Dichtungen sehr zuverlässig kooperieren und ein guter Dichteffekt entsteht.

Herstellungstechnisch zweckmäßig sind beide Dichtungen identisch, obwohl nicht ausgeschlossen sein soll, zwei unterschiedlich konzipierte Dichtungen zu verwenden, die sich beispielsweise mit ihren Gegenprofilen zusätzlich verzahnen.

Bei einer vorteilhaften Ausführungsform des Tanks ist in der Öffnungsrandstruktur eine zur Fügeebene offene Rinne vorgesehen, die der Aufnahme der Verbreiterung der Dichtung dient. Im Grund der Rinne ist der Dichtungskanal eingeformt, der enger ist als die Rinne. Auf diese Weise findet die eingesetzte Dichtung guten Halt, und wird sie nicht nur über den Steckfuß, sondern auch über die Verbreiterung in Querrichtung abgestützt.

Zweckmäßig schließen sich in den Öffnungsrandstrukturen zu beiden Seiten der Rinne ebene und in einer gemeinsamen Ebene liegende Passflächen mit einer die Tankteilwandstärke deutlich übersteigenden Weite an, und zwar innere und äußeren Passflächen. Diese Passflächen erhöhen die Gestaltfestigkeit der Öffnungsrandstruktur, und können in gefügtem Zustand des Tanks einander kontaktieren oder sogar einen geringen Zwischenabstand einhalten, und bieten vor allem die Möglichkeit, für die z.B. identischen Tankteile auch eine andere Fügeart anwenden zu können, beispielsweise Verschweißen, wobei dann allerdings die Dichtungen und die Klammern nicht benötigt werden. Dennoch sind die Tankteile für beide Fügearten gleichermaßen brauchbar. Geschweißte Tanks können in Einsatzfällen verwendet werden, in denen der Endverbraucher die Montage vermeiden möchte, oder ohnedies nur geringe Transportkosten oder gute Transportbedingungen vorliegen, so dass die Tankteile nicht als Transportgebinde beispielsweise gestapelt geliefert werden, sondern der bereits verschweißte, weitestgehend betriebsfertige Tank.

Um die Montage des Tanks mit den Schnellverbindern und den Dichtungen zu vereinfachen, ist, zweckmäßig in einer der Passflächen, vorzugsweise der inneren Passfläche, entlang der Öffnungsrandstruktur eine Reihe beabstandeter Sacklöcher eingeformt, die zum Anbringen von als Losteile ausgebildeten Zentriergliedern dienen. Diese Zentrierglieder erleichtern das Ausrichten der Öffnungsrandstrukturen beim Zueinanderbringen der Tankteile, in welche die Dichtungen bereits eingesetzt sind. Da die Zentrierglieder erst bei der Montage eingebracht werden, und auch wahlweise nur in einige der Sacklöcher, falls nicht alle Sacklöcher zu besetzen sind, stören die Zentrierglieder beim Transport der Tankteile nicht, und ist es kein Problem, falls ein bei der Montage ein Zentrierglied beschädigt werden sollte, weil es sich vor Ort einfach gegen ein funktionsfähiges ersetzen lässt.

Die Zentrierglieder, die nach einem eigenständigen erfinderischen Gedanken als Losteile nur in vorgesehen Sacklöcher eingebracht werden, weisen jeweils zwei Endteile auf, deren jedes in ein Sackloch mit einer Gleitpassung eingesteckt wird. Diese Handhabung ist bequem. Die Gleitpassung sichert zwar den festen Sitz und die Zentrierwirkung, verzeiht jedoch Fehlausrichtungen leichter als fest angeformte Zentrierzapfen. Außerdem ist es möglich, die Zentrierglieder aus einem kostengünstigen und genau an die Zentrieraufgabe angepassten Material herzustellen, unabhängig vom Material der Tankteile bzw. deren Öffnungsrandstrukturen. Wichtig ist ferner, dass die Losteil-Zentrierglieder bei der Schweißung des geschweißten Tanks - weil weggelassen - in der Schweißebene nicht stören. Die Idee der Losteil-Zentrierglieder ist also ein zweckmäßige Fortführung des Gedankens, die Tankteile wahlweise mit Schnellverbindern oder durch Schweißen fügbar zu gestalten.

Bei einer zweckmäßigen Ausführungsform weist jedes Zentrierglied zwischen den beiden Endteilen einen Bund auf, der bei gefügten Tankteilen mit Spiel in einer Hohlkammer aufgenommen wird, die von den beiden aufeinander ausgerichteten Vertiefungen in den Öffnungsrandstrukturen definiert ist. Der Bund ermöglicht es, die genau richtige Einstecktiefe jedes Endteils zu erzielen, beispielsweise indem das Zentrierglied mit einem Gummihammer oder einem anderen Werkzeug bis auf Anschlag in ein Sackloch getrieben wird, bis der Bund ansteht.

Zweckmäßig ist das Zentrierglied ein hohler Kunststoffformteil, vorzugsweise ein Spritzgussformteil oder Spritzprägeformteil, aus starrem oder halbstarrem Kunststoffmaterial. Alternativ könnte das Zentrierglied auch aus einem Metall oder einem anderen Material bestehen.

Die beiden Endteile des Zentrierglieds sind zweckmäßig konisch oder angespitzt, damit sie sich leicht einsetzen lassen. Ferner ist es vorteilhaft, an den Endteilen, und gegebenenfalls dem Bund, außen abwechselnd Rippen und Nuten vorzusehen, die sich im Wesentlichen parallel zur Achse des Zentrierglieds erstrecken. Damit werden Herstellungstoleranzen der Sacklöcher und des Zentriergliedes auf einfache Weise ausgeglichen und findet jedes Zentrierglied einen festen Passsitz. Da die Rippen und Nuten die Kontaktfläche insgesamt reduzieren, ist es auch möglich, bei einer Demontage oder im Falle einer Beschädigung eines Zentriergliedes das Zentrierglied wieder leicht auszubauen.

Zweckmäßig sind die Rippen und die Nuten einer Zentriergliedhälfte gegenüber den Rippen und Nuten der anderen Zentriergliedhälfte bzw. des anderen Endteils um die Achse des Zentrierglieds auf Lücke gesetzt. Dies hat formentechnische Vorteile und ermöglicht es, die Wandstärke des Zentriergliedes mit seinem inneren Hohlraum im Wesentlichen konstant zu halten. Die Wandstärke sollte aus formentechnischen Gründen ohnedies relativ konstant sein, damit Schwund- oder Verzugserscheinungen nach der Produktion minimiert sind. Die Zentrierglieder werden mit den Tankteilen und den Dichtungen zweckmäßig als Zubehörteile in ausreichender Anzahl mitgeliefert.

Ausführungsformen des Erfindungsgegenstandes werden anhand der Zeichnungen erläutert. Es zeigen:
- Fig. 1: eine Perspektivansicht eines Tanks, und zwar als Beispiel eines aus Kunststoff bestehenden Wassertanks zur Regenwasser-Nutzung,
- Fig. 2: eine Schnittansicht der Tankteile beim Fügen,
- Fig. 3: einen Schnitt entsprechend Fig. 2 in gefügtem Zustand der Tankteile, und
- Fig. 4: einen Querschnitt durch eine Dichtung.

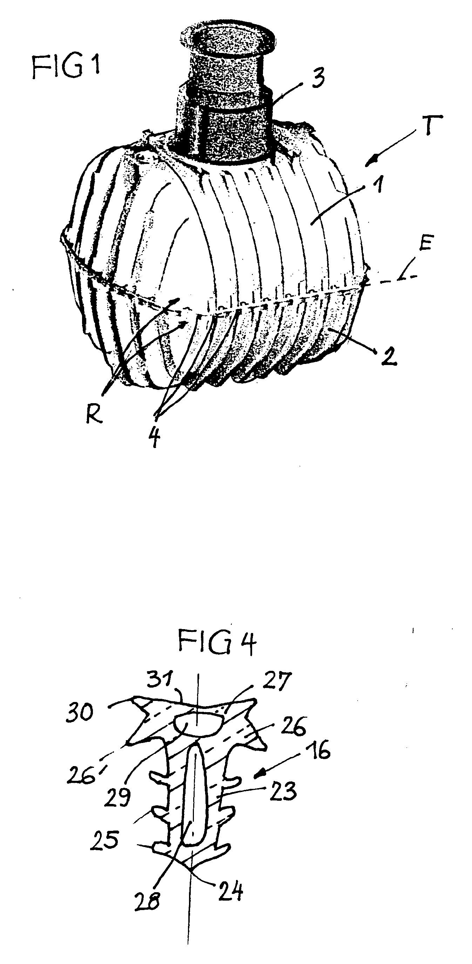

Ein Tank T in Fig. 1 ist beispielsweise aus zwei identischen Tankteilen 1, 2 erstellt und dient als Regenwasser-Nutzungstank, obwohl die Art der Fügeverbindung der Tankteile auch bei anderen Tanks mit nicht identischen Tankteilen oder auch bei Schächten oder dgl., z.B. aus Kunststoff, verwendbar ist. Jeder Tankteil 1, 2 des mit einem nachträglich angebrachten Tankdom 3 ausgestatteten Tanks T weist eine Öffnungsrandstruktur R auf, wobei die Öffnungsrandstrukturen R der beiden Tankteile 12 entweder identisch sind oder zumindest zueinander passen. Die Öffnungsrandstrukturen R sind unter Herstellen einer Abdichtung in einer Fügebene E durch außen aufgebrachte Schnellverbinder 4, beispielsweise C-förmige Klammem, gefügt.

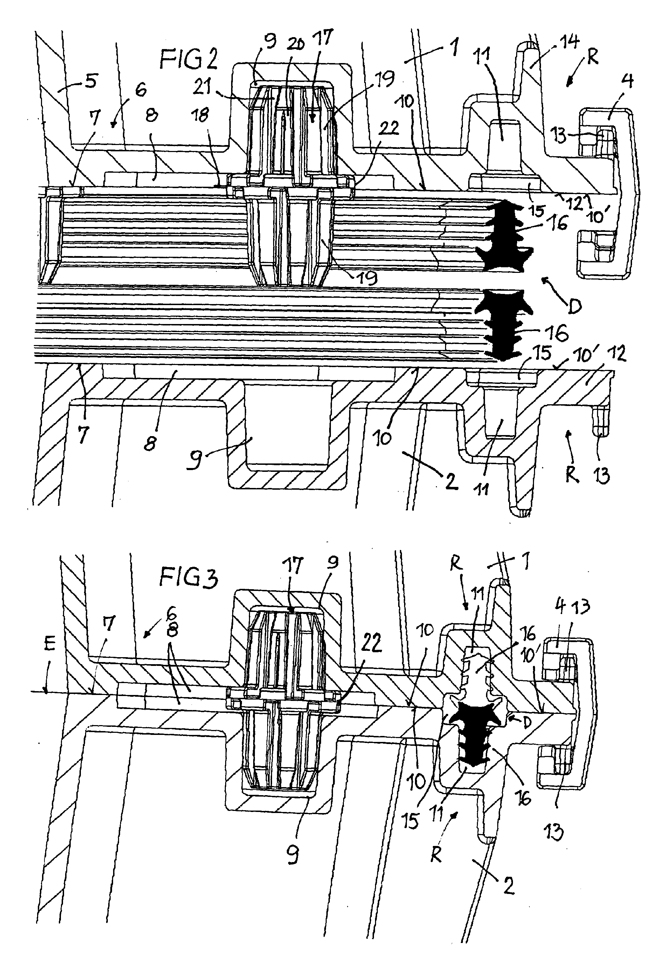

In Fig. 2 sind die Öffnungsrandstrukturen R der Tankteile 1, 2 nahe aneinander angenähert und aufeinander ausgerichtet, wobei als zusätzliche Ausstattungskomponenten des Tanks eine Dichtanordnung D aus zwei Dichtungen 16, die Schnellverbinder 4, und, als Option, Zentrierglieder 17 vorgesehen sind.

Die Tankteilwand 5 kann bei der gezeigten Ausführungsform mit im Wesentlichen senkrecht zur Fügeebene E orientierten, bis zur Fügeebene verlaufenden Rippen 6 gestaltet sein, derart, dass jedes Rippenende einen umlaufenden, abgeflachten Rand in Form einer Passfläche 7 definiert, die z.B. weiter ist als die Wandstärke der Tankteilwand 5. Diese Passfläche 7 steht in Verbindung mit einer inneren, entlang der Öffnungsrandstruktur R kontinuierlichen Passfläche 10, die ebenfalls weiter ist als die Stärke der Tankteilwand 5. Die Passfläche 7 umgibt eine Vertiefung 8, in der ein Sackloch 9 eingeformt ist, das gegebenenfalls schwach konisch ist. An die innere Passfläche 10 schließt sich ein im Querschnitt konischer Dichtungskanal 11 an, auf den eine äußere Passfläche 10' folgt, deren Weite ebenfalls größer ist als die Wandstärke der Tankteilwand 5. Die Passflächen 7, 10, 10' liegen in einer gemeinsamen Ebene, die parallel zur oder in der Fügeebene E sein kann, und dienen bei einer anderen, nicht dargestellten Fügeart zum Erstellen des Tanks T beispielsweise dazu, die Tankteile 1, 2 flächig miteinander zu verschweißen, und zwar ohne Zentrierglieder 17 und ohne Dichtungen 16.

Bei der hier beschriebenen Fügeart mit den Schnellverbindern 4 können in gefügtem Zustand (Fig. 3) die Passflächen mit leichtem Anpressdruck aufeinander sitzen, oder einen geringen Zwischenabstand einhalten.

Die äußere Passfläche 10' ist an einer Flanschverlängerung 12 angeformt, welche in regelmäßigen Umfangsabständen von der Fügeebene E weggerichtete Widerlager 13 für die Schnellverbinder 14 trägt. Ferner ist ein Versteifungsflansch 14 angeformt, der außerhalb des Dichtungskanals 14 von der Fügeebene wegstrebt und die Gestaltfestigkeit der Öffnungsrandstruktur R erhöht. Der Dichtungskanal 11 ist am Boden einer entlang der Öffnungsrandstruktur verlaufenden, zur Fügeebene offenen Rinne 15 geformt, die weiter ist als der Dichtungskanal 11.

Die Dichtungsanordnung D zum Abdichten des Fügebereichs besteht bei dieser Ausführungsform aus zwei Dichtungen 16, deren jede in einen Dichtungskanal 11 eingesetzt wird, und die unter dem Fügedruck der Schnellverbinder 4 komprimiert werden, zusammenwirken und in der Fügeebene E abdichten. Die beiden Dichtungen 16 können identisch sein, obwohl auch voneinander unterschiedliche Dichtungen 16 möglich wären. Die Dichtungen 16 bestehen zweckmäßigerweise aus einem Elastomer- oder Gummimaterial, und können extrudiert sein, obwohl auch andere Herstellungsarten dieser zweckmäßig als endlose Dichtungsringe oder Dichtungsrahmen ausgebildeten Dichtungen möglich sind.

Jedes Zentrierglied 17 ist bei dieser Ausführungsform zu einer Symmetrieebene 18 weitgehend symmetrisch mit zwei Endteilen 19 ausgebildet, die konisch bzw. angespitzt sind und bis in einen dazwischen liegenden, größeren Bund 22 mit in etwa parallel zur Längsachse des Zentriergliedes 17 verlaufenden Rippen 20 und dazwischen liegenden Nuten 21 beispielsweise als Kunststoffformteile, ausgebildet sind. Die Rippen und Nuten 20, 21 eines Endteils und der oberen Hälfte des Bundes 22 sind z. B. um die Achse des Zentriergliedes gegenüber den Rippen und Nuten des anderen Endteils 19 auf Lücke gesetzt. Das Zentrierglied 17 ist ggfs. hohl und weist dabei eine im Wesentlichen gleichmäßige Wandstärke auf. Das Zentrierglied könnte auch aus Metall oder einem anderen Werkstoff bestehen.

Das Sacklock 9 ist bei dieser Ausführungsform tiefer als der Dichtungskanal 11. Jeder Endteil 19 lässt sich so weit in das Sackloch 9 eintreiben, dass das Ende des Endteils einen kleinen Abstand gegenüber dem Boden des Sackloches 9 hat, während der Bund 22 auf dem Boden der Vertiefung 8 aufstehen kann.

In Fig. 3 sind die Tankteile 1, 2 mittels der Schnellverbinder 4 gefügt, die Dichtungen 16 komprimieren einander und dichten in der Fügeebene E ab und jedes Zentrierglied sitzt zwei aufeinander ausgerichteten Sacklöchern 9, wobei der Bund 22 mit einem Spiel in den Vertiefungen 8 untergebracht ist. Es können alle Sacklöcher 9 oder nur ausgewählte mit Zentriergliedern 17 besetzt sein.

Wie anhand Fig. 4 erläutert wird, ist jede Dichtung 16 mit einem Steckfuß 23 in den Dichtungskanal 11 eingesetzt, derart, dass es sich mit einer Verbreiterung 26 in der Rinne 15 abstützt, wobei die beiden Dichtungen 16 der Dichtungsanordnung D über den Fügedruck komprimiert und gegeneinander gespannt sind.

Die Dichtung 16 (Fig. 4) ist eine Spezialdichtung, beispielsweise ein Hohlkammerprofil mit Hohlkammern 28 und 29, obwohl eine massive Bauweise ebenfalls möglich ist.

Die Dichtung 16 der Ausführungsform in Fig. 4 besitzt den sich im Querschnitt zu einer Spitze 24 verjüngenden Steckfuß 23, an dessen Außenseiten entgegen der Einsteckrichtung schräg zurückweichende Dichtlippen 25 angeformt sind. Zumindest eine Dichtlippe 25 ist zweckmäßig, damit im Dichtungskanal 11 eine ausreichende Dichtung entsteht, und die eingesetzte Dichtung 16 durch die Hakenwirkung der Dichtlippen 25 festgelegt bleibt. Am oberen Ende des Steckfußes 23 schließt sich die Verbreiterung 26 auf, die in äußeren, in Einsteckrichtung schrägen Dichtlippen 26 ausläuft, und die bei der Montage in die Rinne 15 eingesetzt wird, so dass der Steckfuß 23 nicht notwendigerweise bis zum Grund des Dichtungskanals 11 eingetrieben zu werden braucht. Auf der dem Steckfuß 21 abgewandten Seite der Verbreiterung 26 ist das Gegenprofil 27 angeformt, das bei dieser Ausführungsform eine konkave Rinnenfläche 31 besitzt, die zur Fügeebene E weist und zur Zusammenarbeit mit der anderen Dichtung bestimmt ist. Diese Rinnenfläche 31 im Gegenprofil 27 läuft zweckmäßig an beiden Seiten in entgegengesetzt zur Einsteckrichtung schräg zurückweichende Dichtlippen 30 aus. Vor dem Fügen der Tankteile 1, 2 stehen die eingesetzten Dichtungen 16 bis über die Fügeebene E bzw. die gemeinsame Ebene der Passflächen 7, 10, 10' vor.

In Fig. 3 sind der Einfachheit halber die beiden gegeneinander gepressten Dichtungen 16 so gezeigt, als ob sie ineinander dringen würden. In Wirklichkeit werden ihre Gegenprofile 27 so gegeneinander gepresst, dass die Rinnenflächen 31 im Wesentlichen flach gedrückt werden und fest aneinander anliegen.

## Patentansprüche

1. Tank (T), insbesondere Wassertank aus Kunststoff, der offene, mit Öffnungsrandstrukturen (R) aufeinander gesetzte, gefügte Tankteile (1, 2) und eine elastische Dichtungsanordnung (D) in aufeinander ausgerichteten Dichtungskanälen (11) der Öffnungsrandstrukturen (R) aufweist, wobei die Öffnungsrandstrukturen (R) in einer Fügeebene (E) durch äußere Spannmittel (4) unter Komprimieren der Dichtungsanordnung (D) gegeneinander spannbar sind, **dadurch gekennzeichnet, dass** die Dichtungsanordnung (D) zwei getrennte, im gefügten Tank (T) komprimierend gegeneinander gepresste Dichtungen (16) aufweist, deren jede in einem Dichtungskanal (11) sitzt und in eingesetztem, noch nicht komprimiertem Zustand von dem Dichtungskanal (11) bis mindestens zur Fügeebene (E) vorsteht.

2. Tank nach Anspruch 1, **dadurch gekennzeichnet, dass** jede Dichtung (16) einen Steckfuß (23), eine, vorzugsweise beidseitige, Verbreiterung (26) am oberen Ende des Steckfußes, und ein Gegenprofil (27) zum Zusammenwirken mit einem Gegenprofil (27) der anderen Dichtung (16) aufweist.

3. Tank nach Anspruch 1, **dadurch gekennzeichnet, dass** die Dichtung (16) eine, vorzugsweise extrudierte, Hohlkammer-Dichtung aus flexiblem Kunststoff oder Gummi ist.

4. Tank nach Anspruch 3, **dadurch gekennzeichnet, dass** die Dichtung (16) eine erste Hohlkammer (28) im Steckfuß (23) und eine zweite Hohlkammer (29) unterhalb des Gegenprofils (27) aufweist.

5. Tank nach Anspruch 2, **dadurch gekennzeichnet, dass** am Steckfuß (23) an beiden Seiten längslaufende, entgegen der Einsteckrichtung zurückweichende Dichtlippen (25) angeformt sind, und dass die Verbreiterung (26) beiderseits in in Einsteckrichtung schräg geneigten Dichtlippen (26') endet.

6. Tank nach Anspruch 2, **dadurch gekennzeichnet, dass** das Gegenprofil (27) in nicht komprimiertem Zustand der Dichtung (16) wenigstens eine, vorzugsweise konkave, offene Rinnenfläche (31) aufweist, die an beiden Seiten in entgegen der Einsteckrichtung zurückweichenden Dichtlippen (30) endet.

7. Tank nach Anspruch 1, **dadurch gekennzeichnet, dass** beide Dichtungen (16) identisch sind.

8. Tank nach Anspruch 1, **dadurch gekennzeichnet, dass** in der Öffnungsrandstruktur (R) eine zur Fügeebene (E) offene Rinne (15) zur Aufnahme der Verbreiterung (26) der Dichtung (16) vorgesehen ist, in deren Grund der enger als die Rinne ausgebildete Dichtungskanal (11) geformt ist.

9. Tank nach Anspruch 8, **dadurch gekennzeichnet, dass** sich in der Öffnungsrandstruktur (R) zu beiden Seiten der Rinne (15) ebene, innere und äußere, in einer gemeinsamen Ebene liegende Passflächen (10, 10'), vorzugsweise mit einer die Tankteil-Wandstärke deutlich übersteigenden Weite anschließen.

10. Tank nach Anspruch 1, **dadurch gekennzeichnet, dass** entlang der Öffnungsrandstruktur (R) beabstandete Sacklöcher (9) jeweils für ein als Losteil ausgebildetes Zentrierglied (17) eingeformt sind, vorzugsweise in einerPassfläche (7, 10).

11. Tank nach Anspruch 10, **dadurch gekennzeichnet, dass** das Zentrierglied (17) zwei im Wesentlichen identische, konische und/oder angespitzte Endteile (19) aufweist, deren jeder in ein Sackloch (9) von zwei aufeinander ausgerichteten Sacklöchern mit einer Gleitpassung einsteckbar ist.

12. Tank nach Anspruch 10, **dadurch gekennzeichnet, dass** Zentrierglieder (17) nur in ausgewählte von mehreren vorgesehenen Sacklöchern (9) eingesteckt sind.

13. Tank nach Anspruch 10, **dadurch gekennzeichnet, dass** jedes Sackloch (9) im Boden einer in der Passfläche (7, 10) ausgesparten Vertiefung (8) angeordnet und tiefer als der Dichtungskanal (11) ist.

14. Tank nach Anspruch 11, **dadurch gekennzeichnet, dass** das Zentrierglied (17) zwischen den Endteilen (19) einen Bund (22) aufweist, der bei gefügtem Tank (T) mit Spiel in einer von beiden Vertiefungen (8) definierten Hohlkammer aufgenommen ist.

15. Tank nach Anspruch 10, **dadurch gekennzeichnet, dass** das Zentrierglied (17) ein hohler Kunststoffformteil, vorzugsweise ein Spritzguss- oder Spritzpräge-Formteil, aus starrem oder halbstarrem Kunststoffmaterial, ist.

16. Tank nach Anspruch 11, **dadurch gekennzeichnet, dass** an den Endteilen (19), und gegebenenfalls dem Bund (22), außen abwechselnd Rippen (20) und Nuten (21) vorgesehen sind, die sich im Wesentlichen in Richtung der Achse des Zentrierglieds (17) erstrecken.

17. Tank nach Anspruch 16, **dadurch gekennzeichnet, dass** die Rippen und Nuten (20, 21) eines Endteils (19) gegenüber den Rippen und Nuten des anderen Endteils auf Lücke versetzt sind.

18. Tank nach Anspruch 15, **dadurch gekennzeichnet, dass** in einem Querschnitt die Wandstärke des Zentriergliedes (17) im Wesentlichen konstant ist.
